# EUROPEAN PATENT APPLICATION

(11) **EP 2 431 854 A2**
(43) Date of publication of application: **21.03.2012**
(21) Application number: 11180997.6
(22) Date of filing: 13.09.2011
(51) Int. Cl.: G06F 3/048, G06F 3/041

(54) **Image display apparatus, image display system, and image display method**

(30) Priority: 15.09.2010 JP 2010206750; 15.07.2011 JP 2011156361
(71) Applicant: Ricoh Company, Ltd., Tokyo 143-8555 (JP)
(72) Inventor: Omura, Katsuyuki, Tokyo, 143-8555 (JP); Ono, Yasuhiro, Tokyo, 143-8555 (JP)
(74) Representative: Schwabe - Sandmair - Marx

(57) **Abstract**

An image display apparatus (200) is provided with a receive unit (210) that receives a frame image from a frame image providing device (270), a display unit (250) that displays the frame image, a touch panel control unit (222) that detects contact point coordinates or approach point coordinates on a touch panel (260) provided for the display unit (250), and a drawing unit (224) that superimposes a drawing image on the frame image by using the contact point coordinates or the approach point coordinates. The display unit (250) displays the frame image or the frame image with the drawing image superimposed thereon.

## Description

### BACKGROUND OF THE INVENTION

### 1. Field of the Invention

The present invention relates to an image display apparatus that displays a desired image on a screen. More particularly, the invention relates to an image display apparatus that allows a user to write a hand-drawn drawing image onto a displayed image, an image display system, an image display method, and a computer program product.

### 2. Description of the Related Art

Interactive whiteboards that display a background image on a large display and allow a user to write a hand-drawn drawing image of, e.g., a character, a numeric, and/or a graphic, onto the background image have conventionally been used at conferences in enterprises, educational institutions, administrative organizations, and the like.

Currently available examples of such an interactive whiteboard include SMART Board of SMART Technologies, StarBoard (registered trademark) of Hitachi Software Engineering Co., Ltd., and Cyber Conference (registered trademark) of Pioneer Cooperation. Disclosed in Japanese Patent Application Laid-open No. 2008-176802 is an interactive whiteboard system including a coordinate-input/detecting device. Each of these interactive whiteboards has a function of displaying a background image on a screen serving as a whiteboard and displaying a drawing image, which is drawn by using a touch panel, on the screen in a superimposed manner.

However, such a conventional interactive whiteboard as described above is controlled by a device driver installed on a personal computer (PC) that provides an image to be displayed on the screen. Accordingly, the conventional interactive whiteboards have a problem that, to use the interactive whiteboard, it is necessary to install a custom driver in each of PCs that provides an image to be displayed.

Furthermore, such a conventional interactive whiteboard includes buttons, which are implemented in hardware, associated with functions provided by the interactive whiteboard. However, there can be a case that a button for an additional function or an extended function is not provided in an interactive whiteboard having already been manufactured and sold. Accordingly, the conventional interactive whiteboards have a problem of being unable to flexibly adapt to an additional function.

Such a conventional interactive whiteboard that receives an image including a button for controlling the interactive whiteboard from a PC that provides the image to be displayed also has a problem that the button cannot be operated on the interactive whiteboard, and therefore the interactive whiteboard is less favorable in terms of operability. Furthermore, moving or the like operation of the button cannot be performed on the screen of the interactive whiteboard. Accordingly, when a drawing image is drawn to be overlaid on an image area where the button is arranged, the viewability of the drawing image, the button, and/or the like reduces. In order to prevent the reduction of viewability, the conventional interactive whiteboards have a problem that a user is required to be careful not to draw a drawing image on the area where the button is arranged.

### SUMMARY OF THE INVENTION

It is an object of the present invention to at least partially solve problems described above and provide an image display apparatus, an image display system, an image display method, and a computer program product realizing the improved operability and viewability, and capable of providing a user interface flexibly adaptable to various extended functions, and in which any control driver is not required to be installed to a PC for providing an image.

According to an aspect of the present invention, there is provided an image display apparatus that displays an image provided with a receive unit that receives a frame image from a frame image providing device that provides the frame image, a display unit that displays the frame image, a touch panel control unit that detects contact point coordinates or approach point coordinates on a touch panel provided for the display unit, and a drawing unit that superimposes a drawing image on the frame image by using the contact point coordinates or the approach point coordinates. The display unit displays the frame image or the frame image with the drawing image superimposed thereon.

According to an aspect of the present invention, there is provided an image display system provided with an image display apparatus that displays an image, and a frame image providing device that provides a frame image to the image display apparatus. The image display apparatus is provided with a receive unit that receives the frame image from the frame image providing apparatus that provides the frame image, a display unit that displays the frame image, a touch panel control unit that detects contact point coordinates or approach point coordinates on a touch panel provided for the display unit, and a drawing unit that superimposes a drawing image on the frame image by using the contact point coordinates or the approach point coordinates. The display unit displays the frame image or the frame image with the drawing image superimposed thereon.

According to an aspect of the present invention, there is provided an image display method to be performed by an image display apparatus that displays an image. The image display method includes receiving a frame image, detecting contact point coordinates or approach point coordinates on a touch panel provided for a display unit on which the frame image is to be displayed, superimposing a drawing image on the frame image by using the contact point coordinates or the approach point coordinates, and displaying the frame image or the frame image with the drawing image superimposed thereon.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram illustrating an image display system according to an embodiment of the present invention;
Fig. 2 is a diagram illustrating a functional configuration of an image display apparatus according to a first embodiment of the present invention;
Fig. 3 is a flowchart illustrating a process to be performed by the image display apparatus according to the first embodiment;
Fig. 4 is a flowchart illustrating a process to be performed, when a second operation mode is selected, by the image display apparatus according to the first embodiment;
Fig. 5 is a diagram illustrating a functional configuration of an image display apparatus according to a second embodiment of the present invention;
Fig. 6 is a flowchart illustrating a process to be performed by the image display apparatus according to the second embodiment;
Fig. 7 is a diagram illustrating a functional configuration of an image display apparatus according to a third embodiment of the present invention;
Fig. 8 is a flowchart illustrating a process to be performed by the image display apparatus according to the third embodiment;
Fig. 9 is a diagram illustrating a functional configuration of an image display apparatus according to a fourth embodiment of the present invention;
Fig. 10 is a flowchart of a process to be performed by the image display apparatus according to the fourth embodiment;
Fig. 11 is a diagram illustrating a display image of the image display apparatus according to the fourth embodiment;
Fig. 12 is a diagram illustrating a display image of an image display apparatus according to a fifth embodiment of the present invention;
Fig. 13 is a flowchart illustrating a process to be performed by the image display apparatus according to the fifth embodiment;
Fig. 14 is a diagram illustrating a display image of an image display apparatus according to a sixth embodiment of the present invention; and
Fig. 15 is a diagram illustrating a hardware configuration of the image display apparatus according to the embodiment of the present invention.

### DETAILED DESCRIPTION OF THE PREFERRED EMBODIMENTS

Exemplary embodiments of the present invention will be described below; however, it should be understood that they are for illustration only and should not be taken as limitation upon the invention.

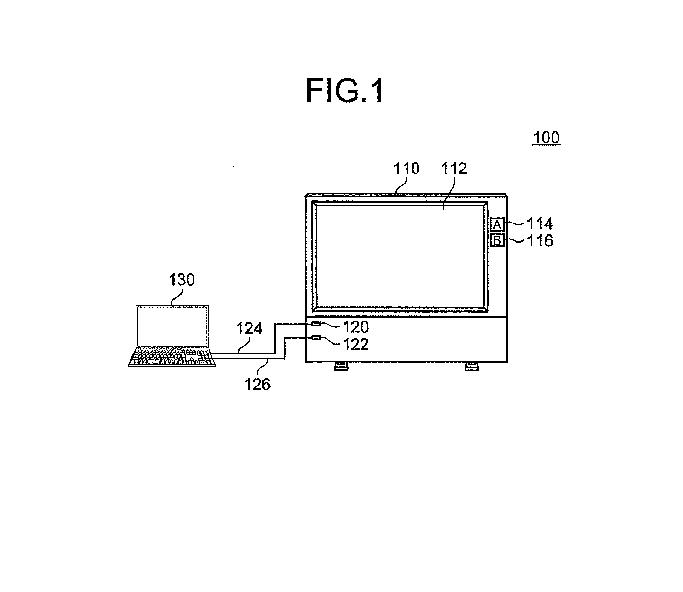

Fig. 1 illustrates an image display system 100 according to an embodiment of the present invention. The image display system 100 includes an image display apparatus 110 and a user PC 130. The image display apparatus 110 is connected to the user PC 130 with cables 124 and 126.

The image display apparatus 110 is an apparatus that displays a drawing image drawn by a user, as well as a display image of a display device of the user PC 130 as a background image thereof. The image display apparatus 110 includes a display unit 112, buttons 114 and 116, a frame image interface 120, and a display image interface 122.

The display unit 112 is a functional unit that displays the background image and the drawing image. On a surface of the display unit 112, a detecting device such as a touch panel is provided. The detecting device is capable of detecting a position or point where a predetermined object (e.g., a finger of a user, a custom pen, or the like) contacts with or approaches close to the surface.

The buttons 114 and 116 are a functional unit that receives an instruction to switch an operation mode of the image display apparatus 110. In the present embodiment, operation buttons 114 and 116 are implemented in hardware. Switching of the operation mode of the image display apparatus 110 will be described in more detail later.

The frame image interface 120 is an interface for receiving from the user PC 130 a frame image corresponding to the background image to be displayed on the display unit 112. In this context, the "frame image" represents image signals transmitted from the user PC 130. In the present embodiment, a video graphics array (VGA) input connector that includes a VGA terminal can be employed as the frame image interface. The frame image interface 120 receives VGA signals through the cable 124, which is a VGA cable or the like, from the user PC 130 and provides the VGA signals to a controller (not shown) of the image display apparatus 110. In other embodiments, the frame image interface 120 may receive image data from the user PC 130 via a wireless communication compliant with a wireless communication protocol such as Bluetooth, Wi-Fi, or the like.

The display image interface 122 is an interface used in processing including acquiring or deleting the display image displayed on the image display apparatus. In this embodiment, a USB (universal serial bus) socket may be used as the display image interface. The display image interface 122 notifies the controller of the image display apparatus 110 of a variety of instructions (e.g., acquisition, deletion, or the like of the display image) provided from the user PC 130 through the cable 126, which is a USB cable or the like.

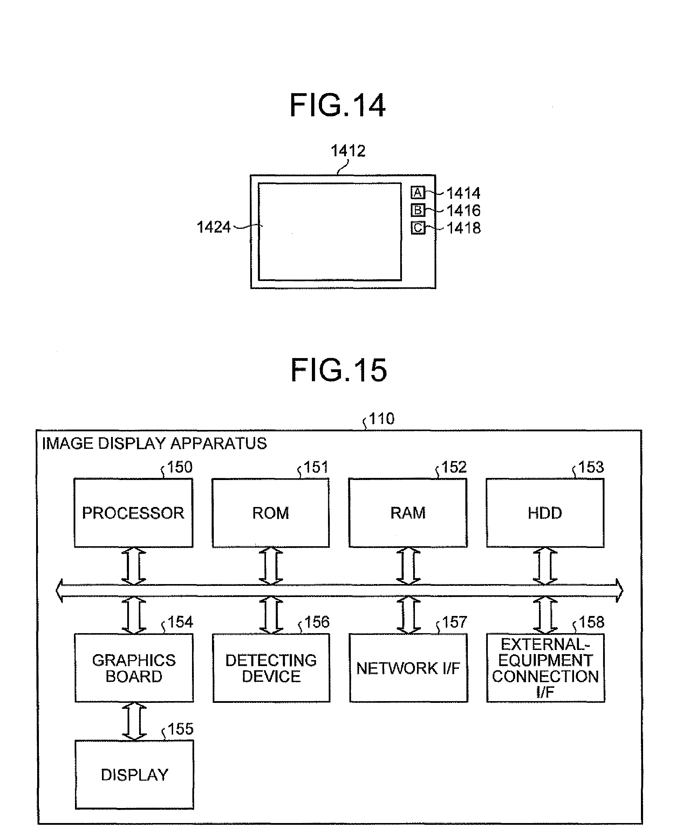

As illustrated in Fig. 15, the image display apparatus 110 includes a processor 150, read only memory (ROM) 151, random access memory (RAM) 152, a hard disk drive (HDD) 153, a graphics board 154, a display 155, a detecting device 156, a network interface 157, and an external-equipment connection interface 158.

The processor 150 is a device that computes processes to be performed by the image display apparatus 110. A variety of processor, such as a central processing unit (CPU) or a micro-processing unit (MPU) of, e.g., Pentium (registered trademark) or Athlon, can be employed as the processor 150. The ROM 151 is nonvolatile memory, in which boot program, such as basic input output system (BIOS), is to be stored.

The RAM 152 is nonvolatile memory that provides memory space for executing program instructions of the present invention. The image display apparatus 110 loads and executes the program instructions of the present invention described in a programming language, such as assembler, C, C++, Java (registered trademark), Java Script, Perl, Ruby, or Python, under management of an operating system (OS), thereby implementing functional units, which will be described later, on the image display apparatus.

The HDD 153 is large-capacity nonvolatile memory. The HDD 153 stores an OS that controls the entire system of the image display apparatus 110. The OS can be any one of a variety of operating systems, such as the Windows (registered trademark) series, UNIX (registered trademark), Android (registered trademark), ITRON, and micro industrial TRON (µITRON). The HDD 153 also stores various data pieces, such as device drivers of the graphics board 154, the display 155, the detecting device 156, and the like and the program instructions of the present invention. The program instructions of the present invention can be stored in a device-readable recording medium, such as a compact disc (CD)-ROM, a magneto optical (MO), a flexible disk, electrically erasable programmable read-only memory (EEPROM), or erasable programmable random read-only memory (EPROM), and can be installed over the network.

The graphics board 154 is a device that performs processing to create graphics data to be displayed on the display 155. The graphics board 154 includes video RAM (VRAM) for holding an image and a connecting terminal of the display 155. The display 155 is a display device that displays the graphics data created by the graphics board 154.

The detecting device 156 is a detecting device that detects that an object contacts with or approaches close to the display 155. In the present invention, a touch panel including an electrical capacitance pressure sensor that detects an electrical capacitance that changes by being touched by an object or a touch panel including a pressure sensor that detects a contact pressure applied by an object can be employed as the detecting device 156. Alternatively, an optical detector that detects that an object is in contact with or proximity of the display 155 by detecting interception of a light beam emitted in one direction parallel to a surface of the display 155 or interception of light beams emitted in two directions, or, more specifically, a lateral direction and a longitudinal direction, can be employed as the detecting device 156.

The network interface 157 is an interface that links the image display apparatus 110 to an external network. The network interface 157 is a physical interface, such as a local area network (LAN) cable connector or a modular cable connector. The external-equipment connection interface 158 is an interface that links the image display apparatus 110 to an external device, such as the user PC 130. The external-equipment connection interface 158 is a physical interface, such as a VGA input connector or a USB port.

The user PC 130 is a frame image providing apparatus that provides a display image, which is to serve as a background image, of the user PC 130 to the image display apparatus 110. In the embodiment illustrated in Fig. 1, a notebook PC is employed as the user PC. However, in other embodiments, an information processing apparatus, such as a desktop PC, a tablet PC, or a personal digital assistant (PDA), capable of providing image data can be employed as the user PC. The user PC 130 includes an interface for outputting a display image displayed on a screen of the user PC 130 and supplies the display image to the image display apparatus 110. In the present embodiment, the user PC 130 includes a VGA output terminal as the interface. Accordingly, the user PC 130 can provide the display image as VGA signals to the image display apparatus 110. In other embodiments, the user PC 130 may transmit the display image by carrying out wireless communications compliant with one of various wireless communication protocols.

The user PC 130 is also capable of acquiring a display image held by the image display apparatus 110. The user PC 130 includes a USB port. Accordingly, the user PC 130 can acquire or delete the display image stored in the image display apparatus 110, to which the user PC 130 is USB-connected, by using a general-purpose driver compliant with the Use Mass Storage Class or the like.

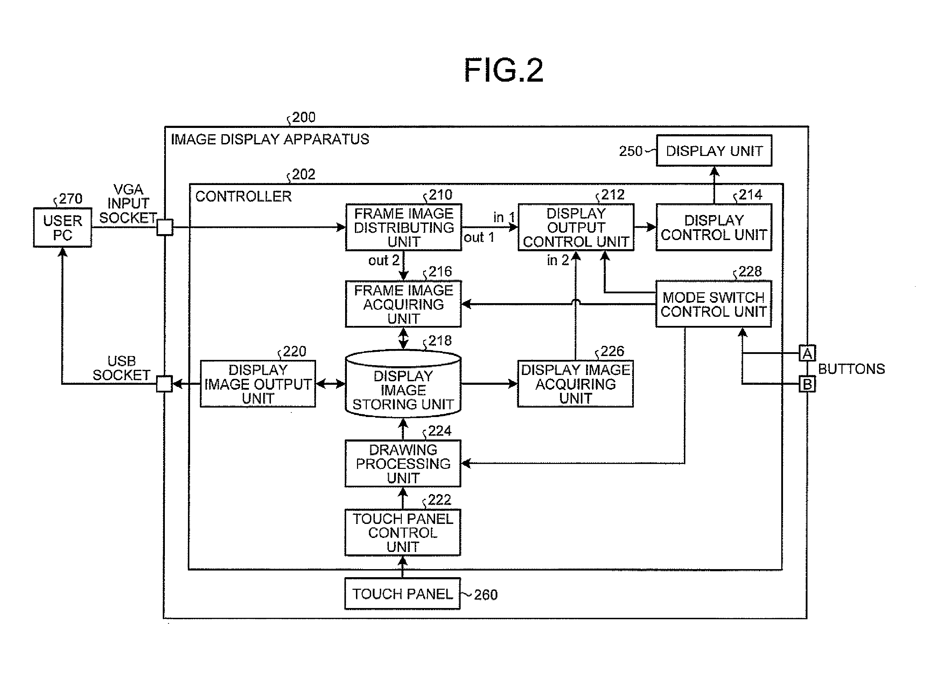

Fig. 2 is a diagram illustrating a functional configuration of an image display apparatus 200 according to a first embodiment of the present invention. The functional configuration of the image display apparatus 200 will be described below with reference to Fig. 2.

The image display apparatus 200 includes a controller 202, a display unit 250, and a touch panel 260. In the first embodiment illustrated in Fig. 2, the touch panel is used as the detecting device. However, in other embodiments, other detecting device, such as an optical detecting device, can be employed.

The controller 202 is a functional unit that processes a background image fed from a user PC 270 and a drawing image input by using the touch panel 260. The controller 202 includes a frame image distributing unit 210, a display output control unit 212, and a display control unit 214.

The frame image distributing unit 210 is a functional unit that acquires from the user PC 270 a frame image to be displayed on the display unit 250 and distributes the frame image to the display output control unit 212 or a frame image acquiring unit 216. In the first embodiment, the frame image distributing unit 210 distributes a frame image of analog signals, such as VGA signals, depending on an operation mode. The operation mode is selectable with buttons.

The display output control unit 212 is a functional unit that selectively outputs the frame image to the display control unit 214 according to a request from a mode switch control unit 228. In the first embodiment, a 2-input, 1-output toggle switch circuit can be used as the display output control unit 212. More specifically, when a first operation mode, in which only the frame image is to be displayed on the display unit 250, is selected, the display output control unit 212 provides the frame image received from the frame image distributing unit 210 to the display control unit 214. By contrast, when a second operation mode, in which a drawing image can be displayed, is selected, the display output control unit 212 provides the frame image received from a display image acquiring unit 226 to the display control unit 214.

The display control unit 214 is a functional unit that causes the frame image received from the display output control unit 212 to be displayed on the display unit 250. The display control unit 214 receives the display image from the display output control unit 212 and transmits the display image in an image signal format that can be displayed by the display unit 250.

The controller 202 includes the frame image acquiring unit 216, a display image storing unit 218, and a display image output unit 220.

The frame image acquiring unit 216 is a functional unit that stores the frame image acquired from the frame image distributing unit 210 in the display image storing unit 218. When a button for selecting the second operation mode is pressed and the frame image acquiring unit 216 receives an instruction to acquire the frame image from the mode switch control unit 228, the frame image acquiring unit 216 stores the frame image in the display image storing unit 218. In the first embodiment, the frame image acquiring unit 216 performs analog-to-digital (A/D) conversion to convert the frame image of analog signals, such as VGA signals, into a digital frame image, and stores the digital frame image in a frame image buffer (not shown) that is accessible by the frame image acquiring unit 216. Upon receiving the instruction to acquire the frame image, simultaneously, the frame image acquiring unit 216 stores a latest one of frame images stored in the frame image buffer in the display image storing unit 218 as a snapshot image.

The display image storing unit 218 is a storage unit that stores a display image to be displayed on the display unit 250. The display image can be the snapshot image or an image obtained by superimposing a drawing image on the snapshot image.

The display image output unit 220 is a functional unit that outputs the display image stored in the display image storing unit 218 to the user PC 270 or deletes the display image from the display image storing unit 218. Upon receiving an instruction to acquire a display image from the user PC 270, the display image output unit 220 acquires the display image containing a drawing image and/or a background image and transmits the display image to the user PC 270. Upon receiving an instruction to delete a display image from the user PC 270, the display image output unit 220 deletes the display image by clearing contents of the display image storing unit 218.

In the first embodiment, the aforementioned process including acquiring, transmitting and deleting the display image can be performed based on the USB Mass Storage Class specification. Also, the aforementioned process including acquiring, transmitting and deleting the display image can be performed by the display image output unit 220, independently of various processes performed for the frame image transmitted from the user PC 270.

In the first embodiment, the display image is transmitted by the display image output unit 220 in response to an acquiring instruction form the user PC 270. Alternatively, in other embodiments, the display image may be acquired from the display image storing unit 218 when the image display apparatus 200 is powered off, and transmitted to a predetermined location of the user PC 270.

The controller 202 further includes a touch panel control unit 222, a drawing processor as a drawing unit 224, the display image acquiring unit 226, and the mode switch control unit 228.

The touch panel control unit 222 is a functional unit that controls the touch panel 260 and provides drawing image configuration information to the drawing processor (drawing unit) 224. In the first embodiment, a device driver capable of controlling the touch panel can be employed as the touch panel control unit 222. The touch panel control unit 222 drives the touch panel 260 and provides contact point coordinates or approach point coordinates (hereinafter, "contact point coordinates or the like") to the drawing processor (drawing unit) 224 as information configuring the drawing image (hereinafter, "drawing image configuration information"). The contact point coordinates are information about a position where an object is brought into contact with the touch panel 260 by a user, while the approach point coordinates are information about a position where an object is brought into proximity of the touch panel 260 by a user.

More specifically, the touch panel control unit 222 transmits a message that depends on an event, which is one of events of various types, transmitted from the touch panel 260 to the drawing processor (drawing unit) 224. The events include an event TOUCH that notifies that the touch panel 260 has detected that a certain object has come into contact with or proximity of the touch panel 260, an event MOVE that notifies that a point where the certain object is in contact with or proximity of the touch panel 260 is moved by the user while maintaining the contacting or proximity state, and an event RELEASE that notifies that the certain object has separated from the touch panel 260. Upon receiving such an event and contact point coordinates or the like associated with the event, the touch panel control unit 222 transmits a message containing the event and the contact point coordinates or the like. The touch panel control unit 222 transmits such a message every time an event occurs.

The touch panel control unit 222 is capable of displaying a user interface, by means of which drawing image attribute information including a thickness and a color of a line segment that forms the drawing image can be specified, on the display unit 250 and providing the drawing image attribute information to the drawing processor (drawing unit) 224 as drawing image configuration information.

The drawing processor (drawing unit) 224 is a functional unit that creates a drawing image and superimposes the drawing image on a frame image stored in the display image storing unit 218. The drawing processor (drawing unit) 224 is activated by the mode switch control unit 228 when the button for selecting the second operation mode is pressed. The drawing processor (drawing unit) 224 then waits for a message that is to be transmitted from the touch panel control unit 222. Upon receiving the message, the drawing processor (drawing unit) 224 determines a type of an event, and performs a process according to the type. In a case of receiving the event TOUCH, the drawing processor (drawing unit) 224 creates a drawing image by using contact point coordinates or the like received from a point in time of receipt of the event TOUCH until receipt of the event RELEASE, and superimposes the drawing image on the frame image stored in the display image storing unit 218. As a result, a frame image, on which the drawing image is superimposed, is stored in the display image storing unit 218.

More particularly, the drawing processor (drawing unit) 224 is capable of generating the drawing image by (i) acquiring the frame image stored in the display image storing unit 218 and (ii) changing pixel values of each coordinate point indicated by each contact point coordinates or the like into pixel values corresponding to colors indicated by the drawing image attribute information. In a case in which a thickness of a line segment is specified, the drawing image can be generated by changing pixel values in a predetermined range around the coordinate point as the center indicated by the contact point coordinates or the like into pixel values corresponding to colors indicated by the drawing image attribute information. The predetermined range can be set in advance according to the thickness of the line segment.

The display image acquiring unit 226 is a functional unit that acquires, when the second operation mode is selected, a display image from the display image storing unit 218 and provides the display image to the display output control unit 212. The display image acquiring unit 226 periodically acquires a display image from the display image storing unit 218, converts the display image into analog signals, and provides the analog signals to the display output control unit 212.

The mode switch control unit 228 is a functional unit that performs a switching control of the operation mode of the image display apparatus 200. The mode switch control unit 228 switches the operation mode according to a type of the button pressed by a user. In the first embodiment, when a button "A" is pressed, the mode switch control unit 228 switches the operation mode of the image display apparatus 200 to the first operation mode, while when a button "B" is pressed, the mode switch control unit 228 switches the operation mode of the image display apparatus 200 to the second operation mode.

More specifically, when the first operation mode is selected, the mode switch control unit 228 transmits to the display output control unit 212 an instruction to perform switching to an input terminal (in1) for receiving a frame image, thereby causing the display output control unit 212 to switch the input terminal. The mode switch control unit 228 also transmits to the drawing processor (drawing unit) 224 an instruction to disable the drawing processor (drawing unit) 224, thereby placing the drawing processor (drawing unit) 224 in a disabled state.

By contrast, when the second operation mode is selected, the mode switch control unit 228 transmits to the display output control unit 212 an instruction to perform switching to an input terminal (in2) for receiving a display image containing a drawing image, thereby causing the display output control unit 212 to switch the input terminal. The mode switch control unit 228 also transmits to the drawing processor (drawing unit) 224 an instruction to enable the drawing processor (drawing unit) 224, thereby placing the drawing processor (drawing unit) 224 in an enabled state. Furthermore, the mode switch control unit 228 transmits an instruction to acquire the frame image to the frame image acquiring unit 216 to cause the frame image received from the user PC 270 to be stored in the display image storing unit 218.

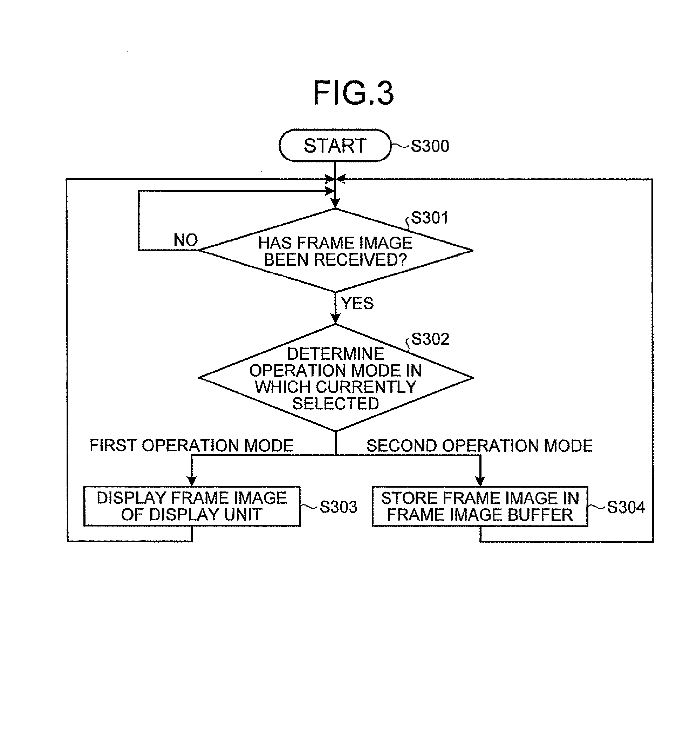

Fig. 3 is a flowchart illustrating a process to be performed by the image display apparatus according to the first embodiment. The process to be performed by the controller 202 will be described below with reference to Fig. 3.

The process illustrated in Fig. 3 starts with Step S300. At Step S301, whether the frame image distributing unit 210 has received a frame image from the user PC 270 is determined. When it is determined that the frame image has not been input (NO at Step S301), the operation at Step S301 is repeated. When it is determined that the frame image has been input (YES at Step S301), process goes to Step S302.

At Step S302, the frame image distributing unit 210 determines which operation mode is currently selected. In the first embodiment, when one of the buttons is pressed, the mode switch control unit 228 changes a value of a dedicated register indicating a type of the operation mode to a value corresponding to the operation mode associated with the button. The frame image acquiring unit 216 can determine which operation mode is a current operation mode by referring to the value of the dedicated register.

When it is determined that the current operation mode is the first operation mode at the determination made at Step S302, the process goes to Step S303. At Step S303, the frame image distributing unit 210 passes the frame image received from the user PC 270 to the display output control unit 212. The display output control unit 212 passes the frame image to the display control unit 214. The display control unit 214 causes the display unit 250 to display the frame image. Upon completion of the operation at Step S303, the process returns to Step S301 and the process illustrated in Fig. 3 is repeated.

By contrast, when it is determined that the current operation mode is the second operation mode at the determination made at Step S302, the process goes to Step S304. At Step S304, the frame image distributing unit 210 passes the frame image received from the user PC 270 to the frame image acquiring unit 216. The frame image acquiring unit 216 stores the frame image in the frame image buffer. Upon completion of the operation at Step S304, the process returns to Step S301 and the process illustrated in Fig. 3 is repeated.

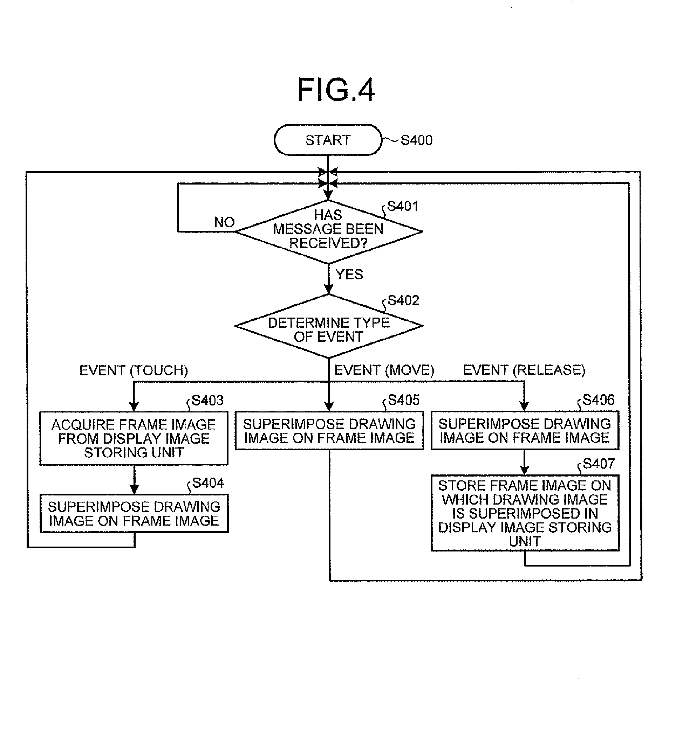

Fig. 4 is a flowchart of a process to be performed, when the second operation mode is selected, by the image display apparatus according to the first embodiment. Below is the flowchart illustrating the process to be performed by the drawing processor (drawing unit) 224.

The process illustrated in Fig. 4 starts with Step S400 when the mode switch control unit 228 starts up the drawing processor (drawing unit) in a situation where the second operation mode is selected. At Step S401, the drawing processor (drawing unit) 224 determines whether a message has been received from the touch panel control unit 222. When it is determined that a message has not been received (NO at Step S401), the operation at Step S401 is repeated. By contrast, when it is determined that a message has been received (YES at Step S401), the process goes to Step S402.

At Step S402, the drawing processor (drawing unit) 224 determines a type of an event contained in the message received from the touch panel control unit 222. If the judgment at Step S402 judges that the type of the event is the event TOUCH, the process goes to Step S403. At Step S403, the drawing processor (drawing unit) 224 acquires the frame image from the display image storing unit 218. At Step S404, the drawing processor (drawing unit) 224 superimposes a drawing image on the frame image by using drawing image configuration information contained in the message. Upon completion of the operation at Step S404, the process returns to Step S401 and the process illustrated in Fig. 4 is repeated.

If the judgment at Step S402 judges that the type of the event is the event MOVE, the process goes to Step S405. At Step S405, the drawing processor (drawing unit) 224 superimposes a drawing image on the frame image, on which the drawing image has been superimposed at Step S404, by using the drawing image configuration information contained in the message. Upon completion of the operation at Step S405, the process returns to Step S401 and the process illustrated in Fig. 4 is repeated.

If the judgment at Step S402 judges that the type of the event is the event RELEASE, the process goes to Step S406. At Step S406, the drawing processor (drawing unit) 224 superimposes a drawing image on the frame image, on which the drawing image has been superimposed at Step S404 or Step S405, by using the drawing image configuration information contained in the message. At Step S407, the drawing processor (drawing unit) 224 stores the frame image, on which the drawing image has been superimposed, in the display image storing unit 218. Upon completion of the operation at Step S407, the process returns to Step S401 and the process illustrated in Fig. 4 is repeated.

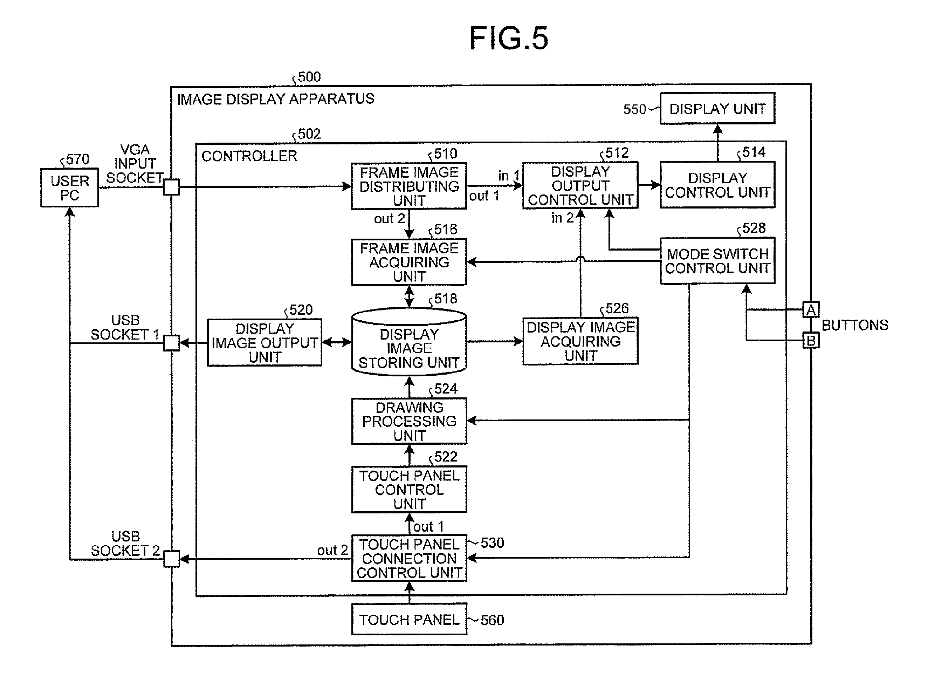

Fig. 5 is a diagram illustrating a functional configuration of an image display apparatus 500 according to a second embodiment of the present invention. The functional configuration of the image display apparatus 500 will be described below with reference to Fig. 5. Note that descriptions about functional units having the same functions as the functional units of the image display apparatus illustrated in Fig. 2 are omitted.

In the second embodiment illustrated in Fig. 5, the image display apparatus 500 includes a touch panel connection control unit 530. The touch panel connection control unit 530 is a functional unit that receives an event and contact point coordinates or the like from a touch panel 560 and selectively outputs the event and the contact point coordinates or the like to a user PC 570 or a touch panel control unit 522 according to a request from a mode switch control unit 528. In the second embodiment, a 1-input, 2-output toggle switch circuit can be used as the touch panel connection control unit 530.

When the first operation mode is selected, the touch panel connection control unit 530 switches its output port to an output terminal (out2) and transmits the event and the contact point coordinates or the like received from the touch panel 560 to the user PC 570 via the USB socket. In other embodiments, the touch panel connection control unit 530 may transmit only the contact point coordinates or the like received from the touch panel 560 to the user PC 570.

By contrast, when the second operation mode is selected, the touch panel connection control unit 530 switches its output port to an output terminal (out1) and provides the event and the contact point coordinates or the like to the touch panel control unit 522.

The mode switch control unit 528 of the second embodiment not only has a function as the mode switch control unit of the first embodiment but also transmits to the touch panel connection control unit 530 an instruction to specify the output port for outputting the event and the contact point coordinates or the like depending on a type of the operation mode. Upon receiving the instruction, the touch panel connection control unit 530 switches its output port as described above.

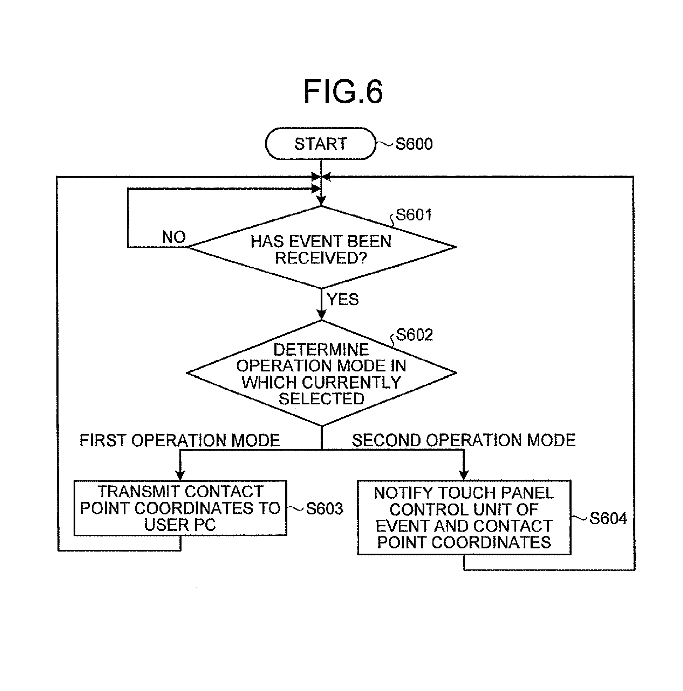

Fig. 6 is a flowchart of a process to be performed by the image display apparatus according to the second embodiment. The process to be performed by the touch panel connection control unit 530 will be described below with reference to Fig. 6.

The process illustrated in Fig. 6 starts with Step S600. At Step S601, the touch panel connection control unit 530 determines whether an event has been received from the touch panel 560. When it is determined that an event has not been received (NO at Step S601), the operation at Step S601 is repeated. By contrast, when it is determined that an event has been received (YES at Step S601), the process goes to Step S602.

At Step S602, the touch panel connection control unit 530 determines which one of the first operation mode and the second operation mode a current operation mode is. In the second embodiment, when one of the buttons of the image display apparatus 500 is pressed, the mode switch control unit 528 changes a value of a dedicated register indicating a type of the operation mode to a value corresponding to the operation mode associated with the pressed button. The touch panel connection control unit 530 can determine which operation mode is the current operation mode by referring to the value of the dedicated register.

If the judgment at Step S602 judges that the first operation mode is selected, the process goes to Step S603. At Step S603, the touch panel connection control unit 530 transmits the event and the contact point coordinates or the like to the user PC 570. Upon completion of the operation at Step S603, the process returns to Step S601 and the process illustrated in Fig. 6 is repeated.

By contrast, if the judgment at Step S602 judges that the second operation mode is selected, the process goes to Step S604. At Step S604, the touch panel connection control unit 530 passes the event and the contact point coordinates or the like received from the touch panel 560 to the touch panel control unit 522. Upon completion of the operation at Step S604, the process returns to Step S601 and the process illustrated in Fig. 6 is repeated.

Upon receiving the event and the contact point coordinates or the like from a drawing processor (drawing unit) 524, the touch panel control unit 522 transmits a message containing the event and drawing image configuration information to the drawing processor (drawing unit) 524 as in the first embodiment. The drawing processor (drawing unit) 524 generates a display image by superimposing a drawing image on a frame image stored in a display image storing unit 518.

In the second embodiment, the image display apparatus 500 provides the contact point coordinates or the like received from the touch panel 560 to the user PC 570. Accordingly, the image display apparatus 500 can function as a pointing device of the user PC 570.

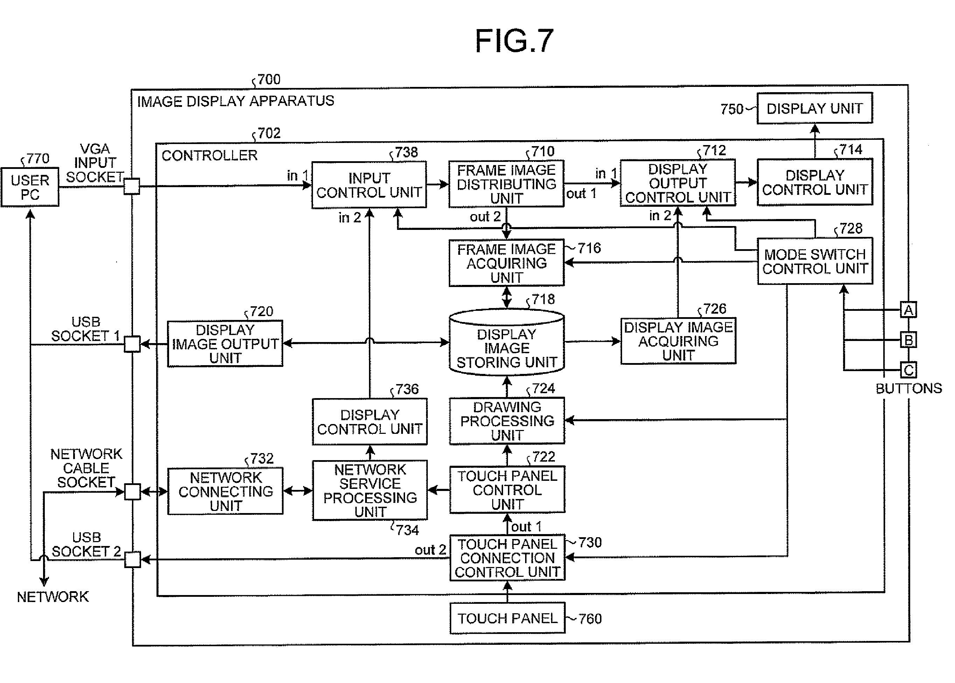

Fig. 7 is a diagram illustrating a functional configuration of an image display apparatus 700 according to a third embodiment of the present invention. The functional configuration of the image display apparatus 700 will be described below with reference to Fig. 7. Note that descriptions about functional units having the same functions as the functional units of the image display apparatus illustrated in Figs. 2 and 5 are omitted.

The image display apparatus 700 includes a network connecting unit 732, a network service processing unit 734, a display control unit 736, and an input control unit 738.

The network connecting unit 732 is a functional unit that receives a variety of image information from a server (hereinafter, "service server") that provides a variety of services over a network connected to a network cable socket and transmits various types of requests received from the network service processing unit 734, which will be described later. In the third embodiment, a network card or the like can be employed as the network connecting unit 732.

The network service processing unit 734 controls the network connecting unit 732 and generates a display image to be displayed on a display unit 750 from the image information received over the network. In the third embodiment, the network service processing unit 734 interprets Web page information provided from the service server to generate the network service screen information that is a display image viewable or displayable on a Web browser. Herein, the Web page information is image information that may be described in a markup language such as HTML or XML, a Web page description language such as Java, Java Script or PHP. The network service processing unit 734 provides the network service screen information to the display control unit 736.

The network service processing unit 734 also receives, as a remote desktop client of another PC connected to the network service processing unit 734 through the network, information configuring a display screen of the other PC and provides the information as network service screen information to the display control unit 736. In the third embodiment, the network service processing unit 734 can implement remote desktop software, such as remote desktop client software of Microsoft Corporation, Virtual Network Computing (VNC) developed by Olivetti & Oracle Research Lab, or Metaframe or XenClient of Citrix Systems, Inc.

Furthermore, the network service processing unit 734 determines what instruction is given by a user by using a touch panel 760 based on an event and contact point coordinates or the like received from a touch panel control unit 722 and the network service screen information, and transmits a variety of request according to the instruction given by the user to the service server via the network connecting unit 732. In the third embodiment, in a situation where the network service processing unit 734 receives an event indicating that a user has touched the touch panel and an event indicating that the user has separated his/her finger from the touch panel, when it is determined that the contact point coordinates or the like associated with these events are in an area of a specific user interface (UI), such as the buttons, on the network service screen generated from the network service screen information, the network service processing unit 734 transmits a request associated with the UI to the service server.

The display control unit 736 is a functional unit that converts the network service screen information received from the network service processing unit 734 into image signals that can be processed by the input control unit 738, a frame image distributing unit 710, a display output control unit 712, and a display control unit 714. In the third embodiment, the display control unit 736 converts the network service screen information, which is digital signals, received from the network service processing unit 734 into VGA signals.

The input control unit 738 is a functional unit that selectively outputs any one of the frame image received from a user PC 770 and the network service screen information received from the display control unit 736 to the frame image distributing unit 710 according to a request from a mode switch control unit 728. In the third embodiment, a 2-input, 1-output toggle switch circuit can be used as the input control unit 738. When the first operation mode or the second operation mode is selected, the input control unit 738 switches its input port to an input terminal (in1) to provide the frame image received from the user PC 770 to the frame image distributing unit 710. By contrast, when a third operation mode, which is a mode for displaying a network service screen (hereinafter, "network service screen display"), is selected, the input control unit 738 switches its input port to an input terminal (in2) to provide the network service screen information received from the display control unit 736 to the frame image distributing unit 710.

In the third embodiment, when an operation button "C" for selecting the third operation mode is pressed, the mode switch control unit 728 transmits an instruction to switch the input port of the unit 738 to the input terminal (in2) to the input control unit 738. The mode switch control unit 728 also transmits, to the display output control unit 712, an instruction to switch the input port of the unit 712 to the input terminal (in1) to acquire a frame image from the frame image distributing unit 710. Furthermore, the mode switch control unit 728 transmits an instruction to disable a drawing processor (drawing unit) 724 to the drawing processor (drawing unit) 724. Furthermore, the mode switch control unit 728 transmits, to a touch panel connection control unit 730, an instruction to switch the output port of the unit 730 to the output terminal (out1) to provide the event and the contact point coordinates or the like to the touch panel control unit 722.

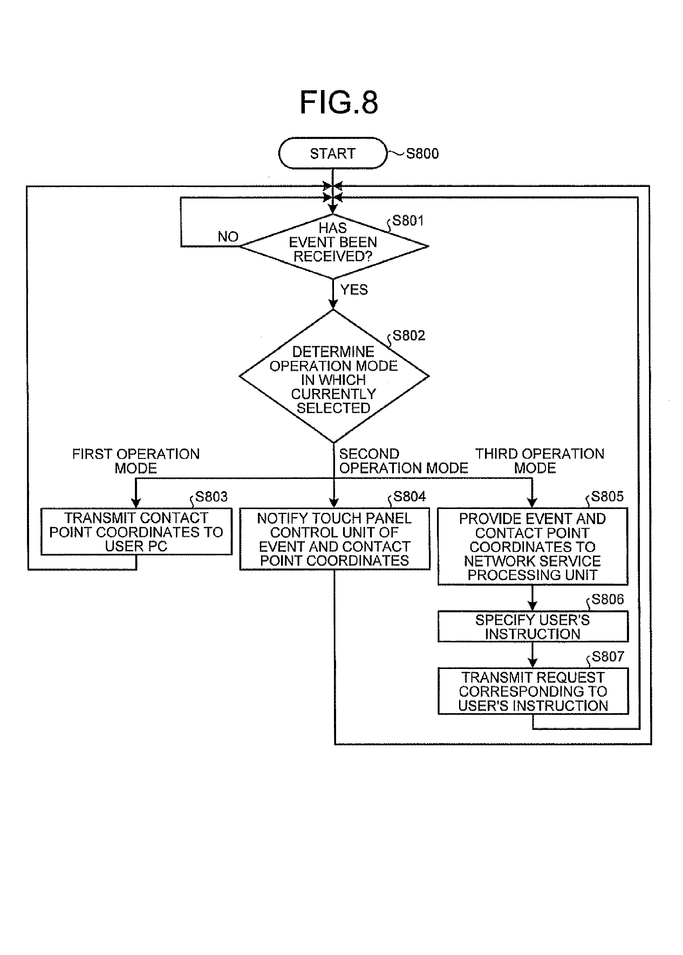

Fig. 8 is a flowchart of a process to be performed by the image display apparatus according to the third embodiment. The process to be performed by the image display apparatus 700 will be described below with reference to Fig. 8. Note that the operations from Step S800 to Step S804 of the process illustrated in Fig. 8 are in common with those from Step S600 to Step S604 of the process illustrated in Fig. 6. Accordingly, repeated descriptions are omitted.

When, as a result of the judgment at Step S802, the touch panel connection control unit 730 has judged that the third operation mode is selected by referring to a dedicated register, to which a value indicating a type of the operation mode is written, as in the second embodiment, the process goes to Step S805. At Step S805, the touch panel connection control unit 730 passes the event and the contact point coordinates or the like to the touch panel control unit 722, which in turn provides the event and the contact point coordinates or the like to the network service processing unit 734.

At Step S806, the network service processing unit 734 specifies an instruction given by a user by using the touch panel 760 based on the event and the contact point coordinates or the like, and the network service screen information. At Step S807, the network service processing unit 734 transmits a request corresponding to the instruction via the network connecting unit 732 to the service server. Upon completion of the operation at Step S807, the process returns to Step S801 and the process illustrated in Fig. 8 is repeated.

In the third embodiment, the image display apparatus 700 is capable of displaying a Web page provided by the service server or a display image of other PC connected to the image display apparatus 700 over the network. Accordingly, the image display apparatus 700 can implement a thin client and a remote desktop client.

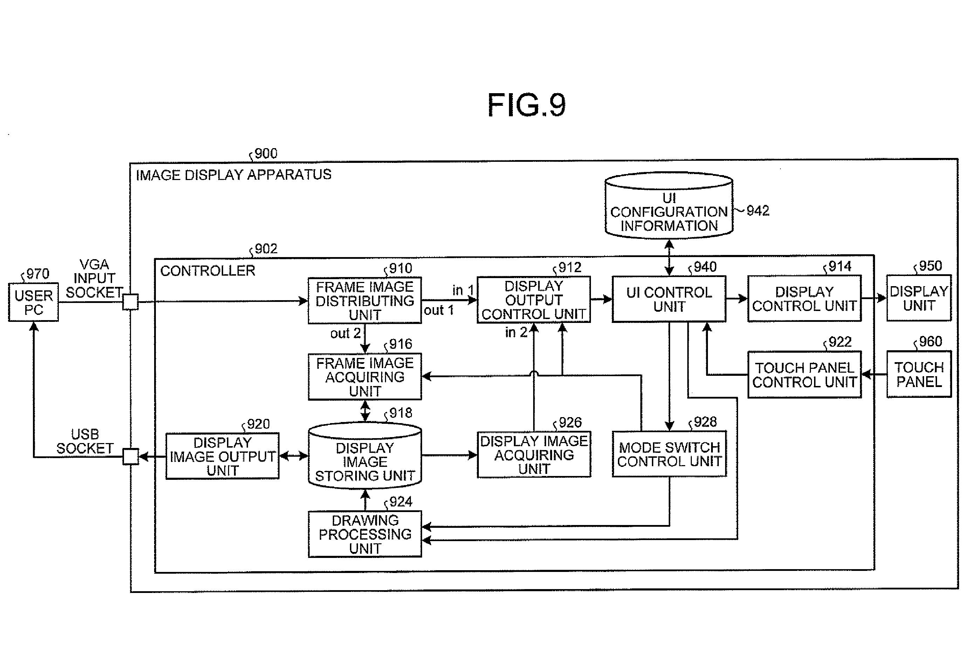

Fig. 9 is a diagram illustrating a functional configuration of an image display apparatus 900 according to a fourth embodiment of the present invention. The functional configuration of the image display apparatus 900 will be described below with reference to Fig. 9. Note that descriptions about functional units having the same functions as the functional units of the image display apparatus illustrated in Fig. 2 are omitted.

In the fourth embodiment illustrated in Fig. 9, the image display apparatus 900 includes, in addition to the functional units of the image display apparatus 200 of the first embodiment, a UI control unit 940 and a storage device 942 that stores UI configuration information. The UI control unit 940 is a functional unit that controls a user interface displayed on a display unit 950. The UI control unit 940 creates the user interface by using the UI configuration information representing positions and sizes of operation buttons and the like contained in the user interface, and causes the user interface to be displayed on the display unit 950 via a display control unit 914. In the fourth embodiment, at startup of the image display apparatus 900, the UI control unit 940 generates the UI by reading out the UI configuration information from the storage device 942 and displays the UI on the display unit 950. In other embodiments, the UI may be generated and displayed on the display unit 950 according to a request from other functional unit.

The UI control unit 940 receives a frame image provided by a user PC 970 or a display image obtained by superimposing a drawing image on the frame image via a display output control unit 912 and displays the frame image or the display image on the display unit 950 via the display control unit 914.

Furthermore, the UI control unit 940 interprets a message transmitted from a touch panel control unit 922 to determine whether a user has selected any operation button or drawn any drawing image. In the fourth embodiment, the message generated by the touch panel control unit 922 includes a type of an event and contact point coordinates or the like on the touch panel associated with the event. Events that can be contained in the message include an event TOUCH that notifies that the user has touched a touch panel 960, an event MOVE that notifies that the user contacting the touch panel 960 has moved a contact point, and an event RELEASE that notifies that the user has separated his/her finger from the touch panel 960. The touch panel control unit 922 transmits such a message to the UI control unit 940 every time an event occurs.

For example, when the user has clicked any operation button, one message containing the event TOUCH and contact point coordinates or the like and one message containing the event RELEASE and contact point coordinates or the like are transmitted. When the UI control unit 940 receives these messages continuously, the UI control unit 940 compares both contact point coordinates or the like contained respectively in both messages. When it is determined that two points indicated by each of contact point coordinates or the like are identical or located in proximity with each other, the UI control unit 940 determines that the user has performed clicking.

When the points indicated by the contact point coordinates or the like are located in any area of any button, the UI control unit 940 determines that an operation performed by the user is an instruction to switch the operation mode, and sends to a mode switch control unit 928 a message notifying that the button has been selected and a type of the selected button. Upon receiving the message, the mode switch control unit 928 transmits an instruction corresponding to the selected button to the display output control unit 912, an frame image acquiring unit 916, and a drawing processor (drawing unit) 924 as in the first embodiment.

By contrast, when the positions indicated by the contact point coordinates or the like are located out of any area of any button, the UI control unit 940 determines that the operation performed by the user is an instruction to draw a drawing image, and sends the contact point coordinates or the like to the drawing processor (drawing unit) 924 as drawing image configuration information.

When a user has drawn a drawing image, one message containing the event TOUCH, one or more messages containing the event MOVE, and one message containing the event RELEASE are transmitted. More specifically, when the UI control unit 940 detects the event TOUCH and subsequently the event MOVE from the message transmitted from the touch panel control unit 922, the UI control unit 940 determines that the operation performed by the user is the instruction to draw the drawing image, and transmits all the contact point coordinates or the like, received from a time point of detection of the event TOUCH until a time point of detection of the event RELEASE, to the drawing processor (drawing unit) 924 as the drawing image configuration information.

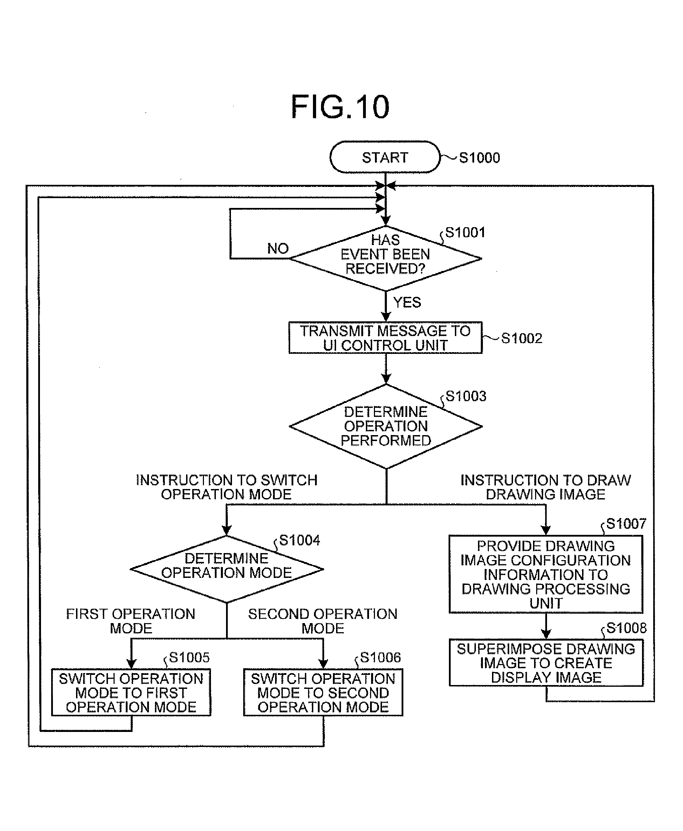

Fig. 10 is a flowchart illustrating a process to be performed by the image display apparatus according to the fourth embodiment. The process to be performed by the image display apparatus 900 will be described below with reference to Fig. 10.

The process illustrated in Fig. 10 starts with Step S1000. At Step S 1001, the touch panel control unit 922 determines whether any event has been received from the touch panel 960. When it is determined that any event has not been received (NO at Step S 1001), the operation at Step S 1001 1 is repeated. By contrast, when it is determined that any event has been received (YES at Step S1001), the process flow goes to Step S 1002. At Step S1002, the touch panel control unit 922 transmits a message corresponding to the event received at Step S1001 to the UI control unit 940. At Step S1003, the UI control unit 940 interprets a message received from the touch panel control unit 922 to determine what operation has been performed by the user.

When, at the judgment at Step S1003, it is judged that the user operation is a selection of the operation button (i.e. an instruction to switch the operation mode), the UI control unit 940 sends to the mode switch control unit 928 a message notifying that the operation button has been selected and a type of the selected operation button and, causes the process to branch to Step S 1004. At Step S 1004, the mode switch control unit 928 judges the operation mode to be switched on, on the basis of the type of the operation button contained in the message received from the UI control unit 940.

If it is judged that the operation mode to be switched on is the first operation mode at the judgment of Step S1004, the process goes to Step S1005. At Step S1005, the mode switch control unit 928 switches the operation mode of the image display apparatus 900 to the first operation mode. Then, the process flow returns to Step S1001 1 and the process illustrated in Fig. 10 is repeated.

By contrast, if it is judged that the operation mode to be switched on is the second operation mode at the judgment of Step S1004, the process flow goes to Step S1006. At Step S1006, the mode switch control unit 928 switches the operation mode of the image display apparatus 900 to the second operation mode. The process flow then returns to Step S1001 and the process illustrated in Fig. 10 is repeated.

If it is judged that the user operation is an instruction to draw a drawing image at the judgment of Step S1003, the process flow goes to Step S 1007. At Step S1007, the UI control unit 940 transmits the contact point coordinates or the like received from the touch panel control unit 922 to the drawing processor (drawing unit) 924 as drawing image configuration information. At Step S1008, the drawing processor (drawing unit) 924 retrieves an frame image from a display image storing unit 918 and generates a display image by superimposing the drawing image on the frame image by using the drawing image configuration information. The process flow then returns to Step S1001 and the process illustrated in Fig. 10 is repeated.

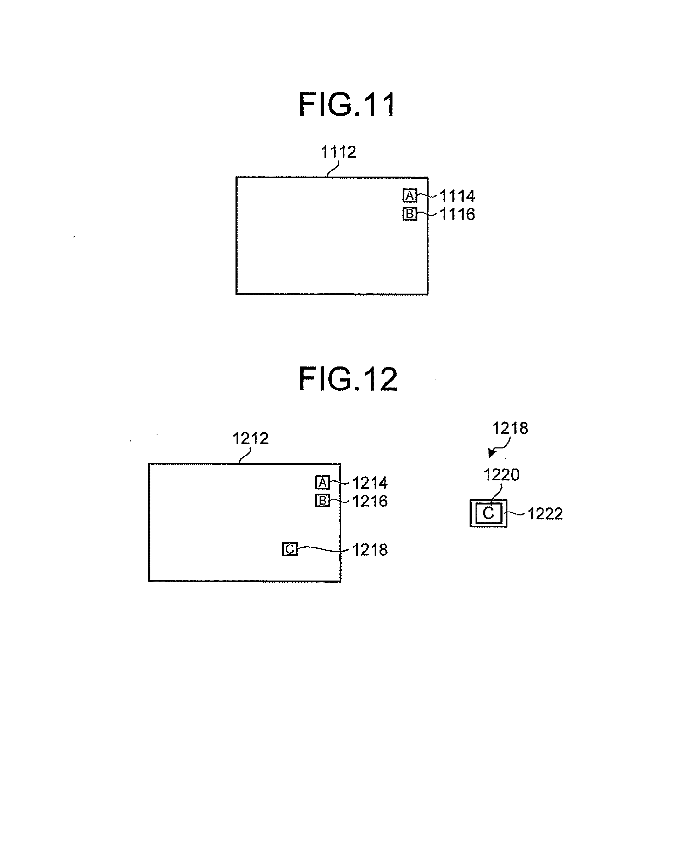

Fig. 11 is a diagram illustrating a display image 1112 of the image display apparatus according to the fourth embodiment. The display image 1112 illustrated in Fig. 11 is an image to be displayed on the display unit 950 of the image display apparatus 900. The display image 1112 includes operation buttons 1114 and 1116. Namely, in the fourth embodiment, the operation buttons for providing an instruction to switch the operation mode of the image display apparatus are displayed as graphical user interface (GUI) on the display image. Thereby, in comparison with the image display apparatus provided with the operation buttons implemented in hardware, it is possible to realize the user interface such as operation buttons of the image display apparatus flexibly applicable to the extended function of the image display apparatus.

Fig. 12 is a diagram illustrating a display image 1212 of an image display apparatus according to a fifth embodiment of the present invention. A functional configuration of the image display apparatus according to the fifth embodiment is similar to that of the fourth embodiment illustrated in Fig. 9. Accordingly, a diagram of the functional configuration of the image display apparatus of the fifth embodiment is omitted.

The display image 1212 illustrated in Fig. 12 is an image to be displayed on a display unit of the image display apparatus. The display image 1212 includes operation buttons 1214, 1216, and 1218. As in the fourth embodiment, the display image of the fifth embodiment is displayed on the display screen as a GUI. Each of the operation buttons of the fifth embodiment includes, as does the operation button 1218 illustrated in Fig. 12, a central area 1220 and an edge area 1222.

In the fifth embodiment, upon receiving any of various events with the relating contact point coordinates or the like, a touch panel control unit transmits a message containing the event TOUCH, the event MOVE, or the event RELEASE, with the contact point coordinates or the like to a UI control unit as in the fourth embodiment. In a situation where the message received from the touch panel control unit is the event TOUCH, and if it is determined that a point indicated by the contact point coordinates is located in the edge area of any operation button, the UI control unit of the fifth embodiment judges that user's instruction is an instruction to move the operation button. In the fifth embodiment, a group of coordinates of the central area as well as a group of coordinates of the edge area of the operation button composes of the UI configuration information and is stored in a storage unit such as RAM, when expanding to RAM of the touch panel that is a control driver of the touch panel. The UI control unit can read out timely the group of coordinates in the central area as well as the group of coordinates in the edge area of the operation button from the storage unit.

The UI control unit displays the operation button at the point indicated by the contact point coordinates or the like received with the event MOVE, while moving the operation button to that indicated point, until a message containing the event RELEASE is received. In this embodiment, if the UI control unit judges that use's instruction is the instruction to move the operation button, the operation button is moved and displayed in accordance with a travel distance from the reference point. In this case, the point indicated by the contact point coordinates or the like received with the event TOUCH can be defined as the reference point.

When the UI control unit receives the event RELEASE and hence determines that moving and displaying the button has completed, the position information of the operation button at the end of the process is stored in a storage unit where the UI configuration information is stored.

In the fifth embodiment, a group of coordinates corresponding to initial values of the central area and the edge area of the operation button which is displayed when the image display apparatus starts up is stored as well as a group of coordinates corresponding to present values of the central area and the edge area of the operation button, for every operation button, into the storage unit for the UI configuration information. In this embodiment, the UI control unit can display the operation button in such a manner that any edge point of the central area of the operation button is defined as a reference point.

Furthermore, in the fifth embodiment, when the instruction to move the operation button is input, and a central area and an edge area of the moved operation button overlaps with a central area and an edge area of another operation button, the UI control unit can cancel the instruction to move the operation button.

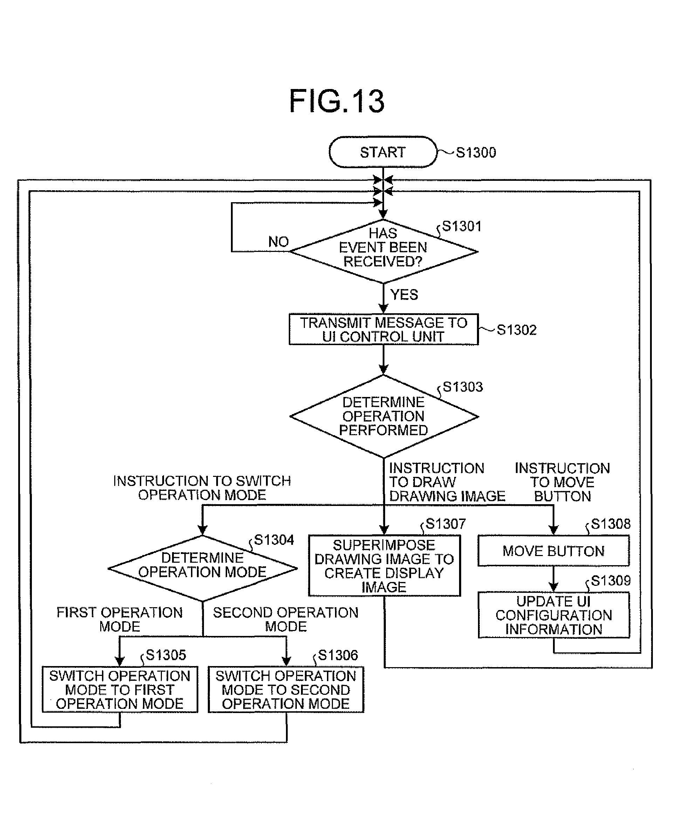

Fig. 13 is a flowchart illustrating a process to be performed by the image display apparatus according to the fifth embodiment. Note that the operations from Step S1300 to Step S 1307 of the process illustrated in Fig. 13 are in common with those from Step S1000 to Step S 1007 of the process illustrated in Fig. 10. Accordingly, repeated descriptions are omitted.

If the UI control unit judges that the user operation is an instruction to move the operation button on the basis of the interpretation of the message received from the touch panel control unit at Step S1302, the process flow goes to Step S1308. At Step S1308, the UI control unit moves the button involved in the instruction to a position and displays the button at the position. At Step S1309, the UI control unit updates the UI configuration information of the moved operation button in the storage device for the UI configuration information. The process flow then returns to Step S1301, and the process illustrated in Fig. 13 is repeated.

According to the fifth embodiment, a button can be moved to a desired position and displayed at the position according to user's instruction. Accordingly, the button can be moved to a position where the button does not overlap a drawing image, thereby improving the operability and the viewability of the image display apparatus.

Fig. 14 is a diagram illustrating a display image 1412 of an image display apparatus according to a sixth embodiment of the present invention. A functional configuration of the image display apparatus according to the sixth embodiment is the same as the fourth embodiment illustrated in Fig. 9. Accordingly, a diagram of the functional configuration of the image display apparatus of the sixth embodiment is omitted.

The display image 1412 illustrated in Fig. 14 is an image displayed on a display unit of the image display apparatus. The display image 1412 includes operation buttons 1414, 1416, and 1418, and an image display area 1424. The image display area 1424 is an area where a display image including a background image and/or a drawing image is to be displayed. In the sixth embodiment, the background image and/or the drawing image are/is displayed in the image area different from the operation buttons. Accordingly, the operability and the viewability of the image display apparatus can be improved.

According to an embodiment of the image display apparatus of the invention, it is possible to selectively display the frame image that is received from the PC for providing the frame image, or the frame image on which the drawing image is superimposed that is generated by using the contact point coordinates or the like on the touch panel. Thereby, it is possible to display the frame image and the drawing image, without installing any control driver of the image display apparatus into the PC for providing the frame image.

According to an embodiment of the image display apparatus of the invention, the user interface such as operation button for receiving the instruction to switch the display screen displayed on the display unit is displayed. Thereby, it is possible to provide the user interface flexibly applicable to the expanded function of the image display apparatus.

According to an embodiment of the image display apparatus of the invention, the interface for receiving the instruction to switch the display screen is movably displayed. Also, the interface for receiving the instruction to switch the display screen is displayed in an area different from an image area where the frame image or the frame image with the drawing image superimposed thereon is displayed. Thereby, it is possible to improve the viewability and operability of the image display apparatus.

According to the present invention, it is possible to provide the operation buttons flexibly applicable to the expanded function of the digital blackboard without installing any control driver into the PC for providing the image to the digital blackboard. Thus, the present invention can provide the image display system, the image display method, as well as the program product, capable of improving the operability and viewability.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image display apparatus (200) that displays an image, the image display apparatus (200) comprising:
a receive unit (210) that receives a frame image from a frame image providing device (270) that provides the frame image;
a display unit (250) that displays the frame image;
a touch panel control unit (222) that detects contact point coordinates or approach point coordinates on a touch panel (260) provided for the display unit (250); and
a drawing unit (224) that superimposes a drawing image on the frame image by using the contact point coordinates or the approach point coordinates, wherein
the display unit (250) displays the frame image or the frame image with the drawing image superimposed thereon.

2. The image display apparatus (200) according to claim 1, further comprising a switch control unit (228) that switches the image displayed on the display unit (250) by an instruction from a user.

3. The image display apparatus (500) according to claim 1 or 2, further comprising a coordinate providing unit (530) that provides the contact point coordinates or the approach point coordinates on the touch panel (560) to the frame image providing apparatus (570).

4. The image display apparatus (700) according to any one of claims 1 to 3, further comprising a display image generating unit (734) that generates a display image to be displayed on the display unit (750) from image information received via a network.

5. The image display apparatus (900) according to claim 1 or 2, further comprising a user interface control unit (940) that controls a user interface displayed on the display unit (950), wherein the user interface includes an interface that receives a screen switch instruction for switching a screen to be displayed on the display unit (950).

6. The image display apparatus (900) according to claim 5, wherein the user interface control unit (940) moves and displays the interface, the interface being for receiving the screen switch instruction.

7. The image display apparatus (900) according to claim 5, wherein the interface for receiving the screen switch instruction is displayed in an image area on the display unit (950) different from an image area where the frame image or the frame image with the drawing image superimposed thereon is displayed on the display unit (950).

8. The image display apparatus (200) according to any one of claims 1 to 7, wherein the receive unit (210) receives a display image of the frame image providing apparatus (270) as the frame image.

9. An image display system (100) comprising:
an image display apparatus (110) that displays an image; and
a frame image providing device (130) that provides a frame image to the image display apparatus (130), the image display apparatus (110) including:
a receive unit (120) that receives the frame image from the frame image providing apparatus (130) that provides the frame image;
a display unit (112) that displays the frame image;
a touch panel control unit (156) that detects contact point coordinates or approach point coordinates on a touch panel (155) provided for the display unit (112); and
a drawing unit (154) that superimposes a drawing image on the frame image by using the contact point coordinates or the approach point coordinates, wherein
the display unit (112) displays the frame image or the frame image with the drawing image superimposed thereon.

10. An image display method to be performed by an image display apparatus that displays an image, the image display method comprising:
receiving a frame image;
detecting contact point coordinates or approach point coordinates on a touch panel provided for a display unit on which the frame image is to be displayed;
superimposing a drawing image on the frame image by using the contact point coordinates or the approach point coordinates; and
displaying the frame image or the frame image with the drawing image superimposed thereon.
